# EUROPÄISCHE PATENTANMELDUNG

(11) **EP 2 469 403 A1**
(43) Veröffentlichungstag der Anmeldung: **27.06.2012**
(21) Anmeldenummer: 10196853.5
(22) Anmeldetag: 23.12.2010
(51) Int. Cl.: G06F 9/44

(54) **Elektrisches Gerät**

(71) Anmelder: Siemens Aktiengesellschaft, 80333 München (DE)
(72) Erfinder: Zwar, Manfred, 76327, Pfinztal (DE)

(57) **Zusammenfassung**

Die Erfindung betrifft ein elektrisches Gerät mit einer Anzeigeeinheit (6), welches zur gleichzeitigen Darstellung von Daten von auf dem Gerät ablauffähigen Programmen in Teilbereichen (4, 5) der Anzeigeeinheit (6) vorgesehen ist. Dadurch, dass das elektrische Gerät (1; 6) dazu ausgebildet ist, mindestens einen Teil der Daten eines der Programme in einer ersten Helligkeits- und/oder Kontraststufe und die restlichen Daten des Programms und der weiteren Programme in mindestens einer weiteren Helligkeits- und/oder Kontraststufe darzustellen, sind auf der Anzeigeeinheit dargestellte Daten leichter auswähl- und modifizierbar, wobei der Energiebedarf des Gerätes (1; 6) verringert wird.

## Beschreibung

Die Erfindung betrifft ein elektrisches Gerät mit einer Anzeigeeinheit, welches zur gleichzeitigen Darstellung von Daten von auf dem Gerät ablauffähigen Programmen in Teilbereichen der Anzeigeeinheit vorgesehen ist.

Ein derartiges elektrisches Gerät ist beispielsweise in Form eines Notebooks mit einer so genannten Windows-Oberfläche bekannt. Daten unterschiedlicher Anwenderprogramme, z. B. Word- oder Excel-Daten, können gleichzeitig in verschiedenen, nebeneinander oder überlappend angeordneten Fenstern auf der Anzeigeeinheit dargestellt werden, wobei die Farbe eines Hintergrundbalkens der Fenster darauf hinweist, welches Fenster gerade aktiviert ist und welche Fenster gerade deaktiviert sind. Die Inhalte aller Fenster, d. h. alle Daten der Anwenderprogramme, werden in einer Helligkeits- und Kontraststufe eingeblendet bzw. dargestellt, was sich nachteilig auf die Übersichtlichkeit der Darstellung der von einem Anwender zu bearbeitenden Daten des Anwenderprogramms auswirkt.

Der Erfindung liegt daher die Aufgabe zugrunde, ein elektrisches Gerät der eingangs genannten Art zu schaffen, welches einem Anwender die Bearbeitung von auf der Anzeigeeinheit dargestellten Daten eines Programms vereinfacht.

Diese Aufgabe wird dadurch gelöst, dass das elektrische Gerät dazu ausgebildet ist, mindestens einen Teil der Daten eines der Programme in einer ersten Helligkeits- und/oder Kontraststufe und die restlichen Daten des Programms und der weiteren Programme in mindestens einer weiteren Helligkeits- und/oder Kontraststufe darzustellen.

Die Erfindung geht von der Idee aus, einerseits einem Anwender die für ihn relevanten Daten optisch verbessert darzustellen, wodurch der Anwender diese auf der Anzeigeeinheit dargestellten Daten leichter auswählen und bearbeiten bzw. modifizieren kann, und andererseits den Energiebedarf des Gerätes zu verringern.

Das Gerät ist derart ausgestaltet, dass z. B. sowohl die aktuell zu bearbeitenden Daten eines Textverarbeitungsprogramms, die gerade in einer Zeile eingeblendet werden, zusammen mit den oberhalb dieser Zeilen eingeblendeten Daten erhellt angezeigt werden. Alle anderen Daten bzw. Zeilen dieses Textverarbeitungsprogramms sowie in weiteren Teilbereichen der Anzeigeeinheit dargestellte Daten anderer Anwenderprogramme sind dagegen dunkler getastet.

Auch ist es möglich, z. B. alle Zeilen des Textverarbeitungsprogramms - also den ganzen Teilbereich der Anzeigeeinheit, in welchem die Daten des Textverarbeitungsprogramms angezeigt werden - erhellt anzuzeigen; die für diese Anwendung nicht relevanten Teilbereiche werden dagegen in einer verminderten Helligkeitsstufe bzw. dunkler dargestellt. Mit anderen Worten: nur der Teilbereich der Anzeigeeinheit bzw. des Displays wird selektiv optisch verbessert, der relevant für die Anwendung bzw. das Anwenderprogramm ist, wobei selbstverständlich für ein Anwenderprogramm mehrere Teilbereiche relevant sein können, die im Hinblick auf die Helligkeits- und/oder Kontraststufen von Teilbereichen anderer Anwenderbereiche unterschiedlich angezeigt werden.

Der in einer ersten Helligkeitsstufe darzustellende Teil kann z. B. ein elliptischer Bereich um einen Cursor in einer pdf-Dokumentenseite sein oder nur eine Warnmeldung auf dem Display. Dieser darzustellende Teil wird erhellt angezeigt; der bzw. die Teilbereiche außerhalb des erleuchteten Bereiches bleiben z. B. halbdunkel, wodurch der Energiebedarf verringert wird.

Selbstverständlich kann ein zu lesender Teil eines dargestellten Dokumentes erhellt und ein weiterer zweiter Teil, in dem Notizen dazu erstellt werden, abgedunkelt werden. Auch kann beispielsweise mit zunehmender Entfernung eines Maus-Zeigers von einer relevanten Position auf der Anzeigeeinheit bzw. vom gewünschten Fokus die Helligkeit reduziert werden. In allen Fällen wird die gesamte Anzeigeeinheit nicht einheitlich z. B. hell oder dunkel getastet, relevante Teilbereiche unterscheiden sich von nicht relevanten in ihrer Darstellung, wodurch relevante Daten leichter ausgewählt und bearbeitet bzw. modifiziert werden können und ferner der Energiebedarf des Gerätes verringert wird.

In einer Ausgestaltung der Erfindung ist vorgesehen, dass das Gerät ferner dazu ausgebildet ist, die Helligkeits- und/oder Kontraststufen zu konfigurieren, z. B. menügesteuert zu parametrieren. Dadurch kann ein Anwender die Stufen seinen Bedürfnissen anpassen und diese konfigurieren bzw. parametrieren.

Dadurch, dass das Gerät ferner dazu ausgebildet ist, Größe und Form des Teilbereiches ebenfalls zu konfigurieren bzw. menügesteuert zu parametrieren, in welchem der mindestens eine Teil der Daten darzustellen ist, wird ebenfalls eine Einstellung entsprechend den Bedürfnissen eines Anwenders ermöglicht.

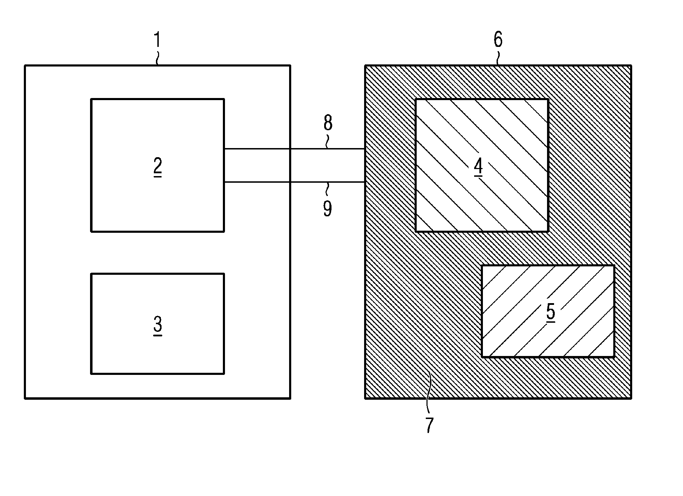

Die Erfindung wird nachfolgend anhand eines Ausführungsbeispiels unter Bezugnahme auf die einzige Figur der Zeichnung näher erläutert. Die Figur der Zeichnung zeigt in einer vereinfachten Darstellung eine Systemeinheit und eine Anzeigeeinheit eines Rechners.

Eine mit 1 bezeichnete Systemeinheit eines Rechners, z. B. ein Rechner in Form eines Industrie-PCs, ist mit einem Grafikprozessor 2 und einem Konfigurations- und Parametrierprogramm 3 versehen. Dieses Konfigurations- und Parametrierprogramm 3 ist zum Einstellen von Helligkeits- und/oder Kontraststufen von in Teilbereichen darstellbaren Daten von Anwenderprogrammen vorgesehen, wobei diese Teilbereiche sowie weitere Bereiche entsprechend den von einem Anwender vorgenommenen Einstellungen im Konfigurations- und Parametrierprogramm 3 auf einer Anzeigeeinheit 6 des Rechners positioniert werden. Unter dem Begriff "in einem Teilbereich darstellbare oder dargestellte Daten" ist im Folgenden auch nur der Begriff "Teilbereich" vorgesehen. Selbstverständlich ist die Systemeinheit mit weiteren Hard- und Software-Komponenten versehen, beispielsweise mit einem Betriebssystem, weiteren Programmen bzw. Software-Applikationen, mit einer CPU-Einheit zum Verarbeiten der Programme sowie Kommunikations-, Grafik- und/oder sonstigen zum Betrieb des Rechners geeigneten Komponenten.

Im vorliegenden Ausführungsbeispiel wird angenommen, dass der Anwender mittels des Konfigurations- und Parametrierprogramms 3 lediglich einem ersten Anwenderprogramm einen Teilbereich 4 und einem zweiten Anwenderprogramm einen zweiten Teilbereich 5 zuordnet und darüber hinaus die Größen dieser Teilbereiche 4, 5, deren Position sowie deren Helligkeits- und Kontraststufen einstellt. Einem restlichen Bereich 7 der Anzeigeeinheit 6 außerhalb der Teilbereiche 4, 5, welcher die Hintergrunddarstellung repräsentiert, ist eine weitere Helligkeits- und Kontraststufe durch den Anwender zugeordnet, die sowohl dunkler als auch kontrastärmer als die Stufen der Teilbereiche 4, 5 gewählt sind. Im vorliegenden Beispiel sind zur Veranschaulichung die unterschiedlichen Helligkeits- und Kontraststufen durch verschiedene Füllmuster angezeigt.

Für den Fall, dass der Anwender das erste Anwenderprogramm startet und dieses dadurch aktiviert, werden lediglich die Daten des ersten Anwenderprogramms im Teilbereich 4 mit der diesem Teilbereich 4 zugeordneten Helligkeits- und Kontraststufe angezeigt. Die weiteren Bereiche 5, 7 werden in der Helligkeits- und Kontraststufe der Hintergrunddarstellung (des Bereiches 7) angezeigt, was bedeutet, dass die im Teilbereich 4 dargestellten Daten deutlicher angezeigt werden und die Bearbeitung dieser Daten durch den Anwender erleichtert wird. Darüber hinaus wird der Energiebedarf aufgrund der dunkleren und kontrastärmeren Hintergrunddarstellung der Bereiche 5, 7 vermindert.

Für den Fall, dass zusätzlich das zweite Anwenderprogramm aktiviert wird, werden zunächst dessen Daten mit der diesem

Teilbereich 5 zugeordneten Helligkeits- und Kontraststufe und die Daten des ersten Anwenderprogramms im Teilbereich 4 mit der diesem Teilbereich 4 zugeordneten Helligkeits- und Kontraststufe angezeigt. Nachdem der Anwender mittels einer Maus den Cursor beispielsweise in den Teilbereich 4 positioniert, bleibt die diesem Teilbereich 4 zugeordnete Helligkeits- und Kontraststufe erhalten, die Helligkeits- und Kontraststufe des Teilbereiches 5 wird allerdings vermindert, derart, dass eine Abstufung der Helligkeits- und Kontraststufe erfolgt. Positioniert der Anwender allerdings den Cursor in den Teilbereich 5, bleibt die diesem Teilbereich 5 zugeordnete Helligkeits- und Kontraststufe erhalten und die Helligkeits- und Kontraststufe des Teilbereiches 4 wird vermindert. In beiden Fällen bleibt die Helligkeits- und Kontraststufe des Bereiches 7 unverändert.

Die Helligkeits- und Kontraststufen der Teilbereiche werden beispielsweise dadurch geändert bzw. modifiziert, indem mittels des Grafikprozessors 2, welcher durch das Konfigurations- und Parametrierprogramm 3 beeinflusst wird, die Leuchtdichten der Bildpixel der Teilbereiche entsprechend modifiziert werden oder indem mittels des Grafikprozessors die LEDs einer LED-Hintergrundbeleuchtung der Anzeigeeinheit 6 entsprechend angesteuert werden, was in der Zeichnung durch Verbindungen 8, 9 zwischen Systemeinheit 1 und Anzeigeeinheit 6 angedeutet ist.

## Patentansprüche

1. Elektrisches Gerät mit einer Anzeigeeinheit (6), welches zur gleichzeitigen Darstellung von Daten von auf dem Gerät (1; 6) ablauffähigen Programmen in Teilbereichen (4, 5) der Anzeigeeinheit (6) vorgesehen ist, **dadurch gekennzeichnet, dass** das elektrische Gerät (1; 6) dazu ausgebildet ist, mindestens einen Teil der Daten eines der Programme in einer ersten Helligkeits- und/oder Kontraststufe und die restlichen Daten des Programms und der weiteren Programme in mindestens einer weiteren Helligkeits- und/oder Kontraststufe darzustellen.

2. Elektrisches Gerät nach Anspruch 1, **dadurch gekennzeichnet, dass** das Gerät (1; 6) ferner dazu ausgebildet ist, die Helligkeits- und/oder Kontraststufen softwaregesteuert einzustellen.

3. Elektrisches Gerät nach Anspruch 1 oder 2, **dadurch gekennzeichnet, dass** das Gerät (1; 6) ferner dazu ausgebildet ist, die Helligkeits- und/oder Kontraststufen zu konfigurieren.

4. Elektrisches Gerät nach einem der Ansprüche 1 bis 3, **dadurch gekennzeichnet, dass** das Gerät (1; 6) ferner dazu ausgebildet ist, softwaregesteuert Größe und Form des Teilbereiches (4, 5) einzustellen, in welchem der mindestens eine Teil der Daten darzustellen ist.

5. Elektrisches Gerät nach einem der Ansprüche 1 bis 4, **dadurch gekennzeichnet, dass** das Gerät (1; 6) ferner dazu ausgebildet ist, Größe und Form des Teilbereiches (4, 5) zu konfigurieren.
